# EUROPÄISCHE PATENTSCHRIFT

(11) **EP 3 275 631 B1**
(45) Veröffentlichungstag und Bekanntmachung des Hinweises auf die Patenterteilung: **12.12.2018**
(21) Anmeldenummer: 17172789.4
(22) Anmeldetag: 24.05.2017
(51) Int. Cl.: B29C 64/393, B29C 64/245, B33Y 30/00, B33Y 50/02, B22F 3/105

(54) **PULVERMODUL FÜR EINE VORRICHTUNG ZUR ADDITIVEN HERSTELLUNG DREIDIMENSIONALER OBJEKTE**
POWDER MODULE FOR AN APPARATUS FOR ADDITIVE MANUFACTURING OF THREE-DIMENSIONAL OBJECTS
BLOC DE POUDRE POUR UN DISPOSITIF DE FABRICATION ADDITIVE D'OBJETS TRIDIMENSIONNELS

(30) Priorität: 29.07.2016 DE 102016114053
(43) Veröffentlichungstag der Anmeldung: 31.01.2018
(73) Patentinhaber: CL Schutzrechtsverwaltungs GmbH, 96215 Lichtenfels (DE)
(72) Erfinder: HERZOG, Frank, 96215 Lichtenfels (DE); BECHMANN, Florian, 96215 Lichtenfels (DE); SCHÖDEL, Frank, 96317 Kronach (DE)
(74) Vertreter: Hafner & Kohl

(56) Entgegenhaltungen:
- EP-A1- 2 913 176
- DE-A1-102012 014 840
- | N.N.: "Linearline Seilzuggeber", , 1. Oktober 2015 (2015-10-01), XP055434222, Buchenbach Gefunden im Internet: URL:https://www.siko-global.com/adbimage/4 81/asset_original/linearline-katalog.pdf [gefunden am 2017-12-12]

## Beschreibung

Die Erfindung betrifft ein Pulvermodul für eine Vorrichtung zur additiven Herstellung dreidimensionaler Objekte, umfassend eine einen mit pulverförmigem Baumaterial befüllbaren Pulverraum begrenzende Pulverkammer, eine in dem Pulverraum angeordnete, den Pulverraum bodenseitig begrenzende, relativ zu der Pulverkammer bewegbar gelagerte Trageinrichtung sowie eine Positionserfassungseinrichtung, welche zur Erfassung der Position der Trageinrichtung, insbesondere relativ zu der Pulverkammer, eingerichtet ist.

Derartige Pulvermodule sind, etwa in Form von Bau- oder Dosiermodulen, als Funktionskomponenten von Vorrichtungen zur additiven Herstellung dreidimensionaler Objekte bekannt. Bei entsprechenden Pulvermodulen ist eine möglichst exakte Erfassung der Position der Trageinrichtung (typischerweise die Position der Trageinrichtung relativ zu der Pulverkammer) zweckmäßig bzw. erforderlich.

Aus dem Dokument DE 10 2012 014 840 A1 ist eine Vorrichtung zur Herstellung dreidimensionaler Objekte bekannt, die einen höhenverstellbaren Träger zum Tragen des herzustellenden Objekts aufweist. Der Träger ist zur Höhenverstellung mit einer Spindelantriebseinrichtung versehen, die zwei von der Unterseite des Trägers nach unten weisende, in antreibbaren, höhenfest gelagerten Spindelantriebsmuttern geführte Spindeln aufweist.

Aus EP 2 913 176 A1 ist ein Verfahren zum generativen Herstellen eines Bauteils bekannt, bei dem eine Ausgangsmaterialschicht mittels eines Verteilungsmittels aufgetragen wird, welche Ausgangsmaterialschicht anschließend entsprechend eines Querschnitts des herzustellenden Bauteils mittels eines Lasers lokal gebunden wird. Das herzustellende Bauteil wird mittels einer Plattform getragen, wobei eine Position oder eine Positionsänderung der Plattform mittels eines Positionserfassungsmittels erfasst wird, um zu ermitteln, ob die Bewegung des Verteilungsmittels störungsfrei ist.

Sofern überhaupt vorhanden, sind bisherige zur Erfassung der Position der Trageinrichtung eingerichtete Positionserfassungseinrichtung weiterentwicklungs- bzw. verbesserungswürdig. Dies gilt insbesondere für die Erfassung der Position der Trageinrichtung bei vergleichsweise langen (hohen) Verfahrwegen.

Der Erfindung liegt die Aufgabe zugrunde, ein demgegenüber, insbesondere im Hinblick auf eine möglichst exakte Erfassung der Position der Trageinrichtung, verbessertes Pulvermodul für eine Vorrichtung zur additiven Herstellung dreidimensionaler Objekte anzugeben.

Die Aufgabe wird durch ein Pulvermodul für eine Vorrichtung zur additiven Herstellung dreidimensionaler Objekte gemäß Anspruch 1 gelöst. Die hierzu abhängigen Ansprüche betreffen mögliche Ausführungsformen des Pulvermoduls.

Das hierin beschriebene Pulvermodul stellt eine Funktionskomponente einer Vorrichtung zur additiven Herstellung dreidimensionaler Objekte dar. Eine entsprechende Vorrichtung ist zur additiven Herstellung wenigstens eines dreidimensionalen Objekts (im Weiteren abgekürzt als "Objekt" bezeichnet) durch sukzessive schichtweise selektive Belichtung und damit einhergehende Verfestigung einzelner Baumaterialschichten aus einem verfestigbaren pulverförmigen Baumaterial (im Weiteren abgekürzt als "Baumaterial" bezeichnet) vermittels wenigstens eines Energiestrahls eingerichtet. Bei dem Baumaterial kann es sich um ein Metall-, Kunststoff- und/oder Keramikpulver handeln. Unter einem Metall-, Kunststoff- oder Keramikpulver kann auch ein Pulvergemisch unterschiedlicher Metalle, Kunststoffe oder Keramiken verstanden werden. Bei dem Energiestrahl kann es sich um einen Laserstrahl handeln. Bei der Vorrichtung kann es sich entsprechend um eine Vorrichtung zur Durchführung selektiver Laserschmelzverfahren (abgekürzt SLM-Verfahren) oder selektiver Lasersinterverfahren (abgekürzt SLS-Verfahren), d. h. um eine selektive Laserschmelzvorrichtung (SLM-Vorrichtung) bzw. eine selektive Lasersintervorrichtung (SLS-Vorrichtung) handeln.

Bei dem Pulvermodul kann es sich im Allgemeinen um jedwedes Pulvermodul handeln, welches zur Aufnahme und/oder Abgabe von Baumaterial eingerichtet ist. Im Besonderen kann es sich bei dem Pulvermodul um ein Baumodul, in welchem der eigentliche additive Aufbau dreidimensionaler Objekte erfolgt und welches hierfür im Rahmen der Durchführung additiver Herstellungsprozesse sukzessive schichtweise mit selektiv zu verfestigendem Baumaterial befüllt wird, um ein Dosiermodul, über welches im Rahmen der Durchführung additiver Herstellungsprozesse sukzessive schichtweise Baumaterial in eine Prozesskammer dosiert wird, oder um ein Auffangmodul, welches im Rahmen der Durchführung additiver Herstellungsprozesse mit nicht verfestigtem Baumaterial befüllt wird, handeln.

Das Pulvermodul umfasst eine Pulverkammer. Die Pulverkammer begrenzt einen mit Baumaterial befüllbaren Pulverraum. Der Pulverraum ist zumindest seitlich durch Wandungen (Pulverkammerwandungen) der in der Regel hohlquaderartig bzw. hohlzylinderartig ausgebildeten Pulverkammer begrenzt. Bodenseitig ist der Pulverraum durch eine Trageinrichtung begrenzt. Die Trageinrichtung ist, typischerweise zwischen zwei Endstellungen, d. h. zwischen einer (bezogen auf die Höhe des Pulvermoduls) oberen und einer unteren Endstellung, relativ zu der Pulverkammer bewegbar gelagert. Die bewegbare Lagerung der Trageinrichtung ermöglicht die Realisierung einer, insbesondere linearen, Bewegung der Trageinrichtung entlang einer vertikalen Bewegungsachse bzw. in einer vertikalen Bewegungsrichtung. Die bewegbare Lagerung der Trageinrichtung ist typischerweise durch eine mit dieser gekoppelte, insbesondere (elektro)motorische, Antriebs- und/oder Aktoreinrichtung realisiert.

Zur Erfassung der Position der Trageinrichtung umfasst das Pulvermodul eine Positionserfassungseinrichtung. Die Positionserfassungseinrichtung ist im Allgemeinen zur Erfassung der Position der Trageinrichtung eingerichtet. Im Besonderen ist die Positionserfassungseinrichtung zur Erfassung der Position der Trageinrichtung in ihren jeweiligen Endstellungen, d. h. insbesondere zur Erfassung der oberen Endstellung der Trageinrichtung, eingerichtet. Die Position der Trageinrichtung kann dabei relativ zu einer Komponente des Pulvermoduls, d. h. insbesondere relativ zu der Pulverkammer erfasst werden. Wesentlich an der Positionserfassungseinrichtung ist, dass diese als Seilzuggeber (Seilzuglängengeber) ausgebildet ist oder wenigstens einen solchen umfasst. Der Einsatz wenigstens eines Seilzuggebers zur Erfassung der Position der Trageinrichtung ermöglicht eine exakte sowie zuverlässige Erfassung der Position der Trageinrichtung. Wie weiter unten erläutert, gilt dies insbesondere auch bei großen Bewegungswegen der Trageinrichtung.

Mithin liegt ein, insbesondere im Hinblick auf eine möglichst exakte Erfassung der Position der Trageinrichtung, verbessertes Pulvermodul für eine Vorrichtung zur additiven Herstellung dreidimensionaler Objekte vor.

Der Seilzuggeber kann ein ortsfest relativ zu der Pulverkammer angeordnetes Gehäuseelement bzw. -teil, ein mit der Trageinrichtung koppelbares oder gekoppeltes, insbesondere seilartiges, Auszugselement ("Auszugseil") sowie eine Erfassungseinrichtung, welche zur Erfassung der Auszugslänge des Auszugselements eingerichtet ist, umfassen. Das Gehäuseelement begrenzt einen Aufnahme- bzw. Innenraum, welcher zur Aufnahme diverser Funktionskomponenten des Seilzuggebers eingerichtet ist. In dem Aufnahmeraum befindet sich neben der Erfassungseinrichtung typischerweise eine, z. B. windenartige, Wickeleinrichtung, an welcher das Auszugselement einseitig befestigt und von welcher das Auszugselement abwickelbar ist. Das Auszugselement kann sich (bezüglich seiner Längserstreckung) zumindest abschnittsweise frei liegend und somit gut zugänglich und/oder sich (bezüglich seiner Längserstreckung) zumindest abschnittsweise von wenigstens einem hülsen- oder ösenartigen Abschnitt umgeben und somit geschützt zwischen dem Gehäuseelement und der Trageinrichtung erstrecken.
Bewegungen der Trageinrichtung resultieren in Änderungen der Auszugslänge des Auszugselements; eine auf eine Bewegung der Trageinrichtung zurückzuführende, insbesondere lineare, Bewegung des mit dieser gekoppelten Auszugselements bedingt eine Rotationsbewegung der Wickeleinrichtung um eine Rotationsachse. Die Erfassungseinrichtung erfasst entsprechende Rotationsbewegungen der Wickeleinrichtung; hierfür kann die Erfassungseinrichtung eine geeignete hard- und/oder softwaremäßig implementierte, mithin elektronische Auswerteeinheit (Gebereinheit), welche zur Auswertung bzw. Umrechnung der erfassten Auszugslänge des Auszugselements im Hinblick auf eine Position der Trageinrichtung eingerichtet ist, umfassen. Die Auswertung kann je nach konkreter Ausbildung der Auswerteeinheit z.B. (photo)elektrisch, optisch, potentiometrisch, etc. erfolgen.
Das Gehäuseelement kann an einem im Bereich eines unteren Endes der Pulverkammer angeordneten oder ausgebildeten Anschlussbauteils angeordnet oder ausgebildet sein. Es handelt sich hierbei um eine besonders kompakte, gleichwohl, z.B. für Service- oder Reparaturzwecke, gut zugängliche Anordnungsmöglichkeit des Gehäuseelements, welche die für die Anordnung des Pulvermoduls in einer Vorrichtung zur additiven Herstellung dreidimensionaler Objekte maßgeblichen Abmessungen des Pulvermoduls nicht verändert. Bei dem Anschlussbauteil kann es sich um ein mehrschenkliges, d. h. z.B. L-förmiges, Winkelelement handeln, bei welchem ein erster Schenkel zur Befestigung des Anschlussbauteils an dem Pulvermodul, insbesondere der Pulverkammer, und ein weiterer Schenkel zur Befestigung des Gehäuseelements an dem Anschlussbauteil dient. Das Anschlussbauteil kann, z. B. vermittels einer Schraubbefestigung, (beschädigungs- bzw. zerstörungsfrei) lösbar an dem Pulvermodul, insbesondere der Pulverkammer, befestigt sein.
Die Trageinrichtung kann einen tischartigen Grundkörper und wenigstens ein, insbesondere mehrere, plattenartige bzw. -förmige, insbesondere stapelartig, auf dem Grundkörper angeordnete oder ausgebildete Auflagekörper umfassen. Jeweilige Auflagekörper können unterschiedlich funktionalisiert sein. Bei entsprechenden Auflagekörpern kann es sich z. B. um eine Bauplatte, einen Heizkörper und einen (thermischen) Isolierkörper handeln. Zwischen unmittelbar benachbarten Auflagekörpern können zumindest abschnittsweise Dichtelemente angeordnet oder ausgebildet sein. Das dem Seilzuggeber zugehörige Auszugselement ist typischerweise, jedoch nicht zwingend, an dem Grundkörper befestigt. Das Auszugselement kann z. B. form- oder kraftschlüssig, d. h. z. B. vermittels einer Einhak-, Klemm-, Press- oder einer Schraubbefestigung, an dem Grundkörper bzw. der Trageinrichtung befestigt sein.
Die Positionserfassungseinrichtung kann mehrere Seilzuggeber umfassen. Die Vorsehung mehrerer Seilzuggeber ermöglicht eine redundante Erfassung der Position der Trageinrichtung, sodass eine Positionserfassung auch bei Ausfall eines Seilzuggebers möglich ist. Gleichermaßen lassen sich vermittels mehrerer Seilzuggeber gegebenenfalls unerwünschte Veränderungen der Ausrichtung der Trageinrichtung, d. h. z. B. Schrägstellungen, erfassen; dies wäre z. B. der Fall, wenn verschiedene Seilzuggeber verschiedene Positionen der Trageinrichtung erfassen. Die vermittels jeweiliger Seilzuggeber erfassten Positionen der Trageinrichtung lassen sich bei entsprechender Konfiguration der der Erfassungseinrichtung zugehörigen Auswerteeinheit, z. B. durch eine Mittelwertbildung, auch gemeinsam auswerten.
Der maximale Bewegungsweg (Hub) der Trageinrichtung kann zwischen 800 und 1200 mm, insbesondere zwischen 950 und 1050 mm, liegen. Der Einsatz entsprechender Seilzuggeber ermöglicht eine exakte Erfassung der Position der Trageinrichtung gerade auch bei entsprechend großen Hüben.

Entsprechend große Hübe der Trageinrichtung erfordern eine entsprechende hoch ausgebildete Pulverkammer. Hierzu kann die Pulverkammer bzw. ein den Pulverraum begrenzender Pulverkammergrundkörper segmentiert ausgebildet sein. Der Pulverkammergrundkörper kann in mehrere unter Ausbildung des Pulverkammergrundkörpers aneinander befestigbare oder befestigte Pulverkammergrundkörpersegmente segmentiert ausgebildet sein. Durch stapelartige Anordnung jeweiliger Pulverkammergrundkörpersegmente können prinzipiell beliebig hohe Pulverkammern und sonach beliebig hohe Bauhöhen realisiert werden. Die Segmentierung ist insbesondere für die Ausbildung des Pulvermoduls als Baumodul relevant.

Die Segmentierung des Pulverkammergrundkörpers in die Pulverkammergrundkörpersegmente erfolgt je nach Anzahl der Pulverkammergrundkörpersegmente in wenigstens einer, gegebenenfalls mehreren, Segmentierungsebenen. Eine jeweilige Segmentierungsebene kann grundsätzlich beliebig im Raum stehen; entsprechende Pulverkammergrundkörpersegmente können prinzipiell in horizontaler und/oder vertikaler Ausrichtung angeordnet sein. Auch bezüglich einer horizontalen oder vertikalen Referenzebene geneigte Segmentierungsebenen sind prinzipiell denkbar.

Die jeweiligen Pulverkammergrundkörpersegmente sind in ihren geometrischkonstruktiven Abmessungen so gewählt, dass diese jeweils in einem Arbeitsgang gefertigt werden können. Der bis dato problematischen Fertigung vergleichsweise hoher Pulver- bzw. Baukammern, d. h. insbesondere Pulverkammern, deren Pulverraum eine maximale Höhe von wenigstens 500 mm überschreitet, d. h. gegebenenfalls 1000 mm oder mehr beträgt, mit den geforderten engen Toleranzen wird sonach durch eine Segmentierung der Pulverkammer in mehrere, unter Ausbildung des Pulverkammergrundkörpers aneinander befestigbare bzw. im Montagezustand der Pulverkammer aneinander befestigte Pulverkammergrundkörpersegmente begegnet.

Durch die Möglichkeit der Befestigung jeweiliger Pulverkammergrundkörpersegmente aneinander lassen sich grundsätzlich beliebig hohe Pulverkammern ausbilden. Dies gilt selbstverständlich insbesondere für den Fall der stapelartigen vertikalen Anordnung bzw. Befestigung jeweiliger Pulverkammergrundkörpersegmente übereinander. Hieraus ergibt sich, dass der Pulverkammergrundkörper vorzugsweise in wenigstens einer horizontalen Segmentierungsebene segmentiert ausgebildet ist, wobei die jeweiligen Pulverkammergrundkörpersegmente bei Segmentierung in der horizontalen Segmentierungsebene in vertikaler bzw. vertikal benachbarter Anordnung übereinander aneinander befestigbar oder befestigt sind.

Die jeweiligen Pulverkammergrundkörpersegmente können eine (hohl)quaderartige bzw. -förmige, hohlzylinderartige bzw. -förmige oder ringscheibenartige bzw. -förmige Grundform aufweisen. Die Pulverkammergrundkörpersegmente umfassen sonach jeweils einen deren jeweilige Grundform (mit)definierenden, durch jeweilige pulverkammergrundkörpersegmentseitige Wandungen begrenzten Innenraum. Der jeweilige pulverkammergrundkörpersegmentseitige Innenraum bildet (im Montagezustand der Pulverkammer) einen Teil des Pulverraums. Jedes Pulverkammergrundkörpersegment begrenzt sonach typischerweise einen einen vollen Innenumfang des Pulverraums beschreibenden Pulverraumabschnitt.

Grundsätzlich können die Pulverkammergrundkörpersegmente in geometrisch-konstruktiver identisch ausgebildet sein oder sich in wenigstens einem geometrischkonstruktiven Parameter, insbesondere deren jeweiliger Höhe, unterscheidend ausgebildet sein. In geometrisch-konstruktiver Hinsicht kann die Pulverkammer sonach (mehrere) identische Pulverkammergrundkörpersegmenten oder (mehrere) unterschiedliche Pulverkammergrundkörpersegmenten umfassen. Die geometrischkonstruktiven Abmessungen der jeweiligen Pulverkammergrundkörpersegmente können insbesondere im Hinblick auf die Realisierung einer bestimmten Sollhöhe der Pulverkammer bzw. des Pulverraums gewählt werden.

Zur Befestigung - die Befestigung ist typischerweise (beschädigungs- bzw. zerstörungsfrei) lösbar - jeweils zur Ausbildung des Pulverkammergrundkörpers aneinander zu befestigender bzw. befestigter Pulverkammergrundkörpersegmente kann an jedem Pulverkammergrundkörpersegment wenigstens ein Befestigungselement angeordnet oder ausgebildet sein. Die jeweiligen Befestigungselemente sind eingerichtet, unter Ausbildung einer (lösbaren) Befestigung wenigstens zweier miteinander zur Ausbildung des Grundkörpers zu verbindender oder verbundener Pulverkammergrundkörpersegmente zusammenzuwirken. Dabei können die jeweiligen Befestigungselemente insbesondere eingerichtet sein, unter Ausbildung einer Befestigung wenigstens zweier miteinander zur Ausbildung des Grundkörpers zu verbindender oder verbundener Pulverkammergrundkörpersegmente form- und/oder kraftschlüssig zusammenzuwirken. Hierunter ist insbesondere zu verstehen, dass die jeweiligen Befestigungselemente eingerichtet sind, miteinander unter Ausbildung einer form- und/oder kraftschlüssigen Verbindung zusammenzuwirken bzw. eingerichtet sind, eine solche auszubilden.

Bei entsprechenden Befestigungselementen kann es sich sonach um, gegebenenfalls korrespondierende, Formschlusselemente, welche eingerichtet sind, unter Ausbildung einer formschlüssigen Verbindung zusammenzuwirken bzw. eingerichtet sind, eine solche herzustellen, oder um, gegebenenfalls korrespondierende, Kraftschlusselemente, welche eingerichtet sind, unter Ausbildung einer kraftschlüssigen Verbindung zusammenzuwirken bzw. eingerichtet sind, eine solche herzustellen, handeln. Entsprechende Formschlusselemente können konkret z. B. als Vorsprung und hierzu (korrespondierende) Aufnahme bzw. Ausnehmung ausgebildet sein. Mithin kann sich durch das Zusammenwirken entsprechender Formschlusselemente z. B. eine Nut-Feder-Verbindung bzw. einer Verbindung nach Art einer solchen ausbilden lassen. Entsprechende Kraftschlusselemente können konkret z. B. als Bolzen bzw. Passstifte und hierzu (korrespondierende), gegebenenfalls mit einem Gegengewinde versehene, Aufnahmen bzw. Ausnehmungen ausgebildet sein. Mithin kann sich durch das Zusammenwirken entsprechender Kraftschlusselemente z. B. eine Bolzen- bzw. Passstift-Verbindung bzw. eine Verbindung nach Art einer solchen ausbilden lassen.

Für die Variante, gemäß welcher die jeweiligen Befestigungselemente eingerichtet sind, unter Ausbildung einer Befestigung wenigstens zweier miteinander zur Ausbildung des Grundkörpers zu verbindender oder verbundener Pulverkammergrundkörpersegmente kraftschlüssig zusammenzuwirken, ist es denkbar, dass die jeweiligen Befestigungselemente als zumindest abschnittsweise von einem Befestigungsbolzen durchsetzbare, insbesondere bohrungsartige, Befestigungsaufnahmen bzw. -ausnehmungen ausgebildet sind und im aneinander befestigten Zustand zumindest abschnittsweise von einem entsprechenden Befestigungsbolzen durchsetzt sind. Bei einem Befestigungsbolzen kann es sich um einen Gewinde- bzw. Schraubbolzen handeln. Eine Befestigungsaufnahme bzw. -ausnehmung eines ersten Pulverkammergrundkörpersegments ist dabei als Durchgangsbohrung ausgebildet, eine Befestigungsaufnahme bzw. -ausnehmung eines mit dem ersten Pulverkammergrundkörpersegment zu verbindenden zweiten Pulverkammergrundkörpersegments kann als Sackbohrung ausgebildet sein. Um jeweilige Pulverkammergrundkörpersegmente beliebig handzuhaben, kann jedes Pulverkammergrundkörpersegment im Bereich eines (oberen) ersten Randbereichs mit einer Durchgangsbohrung und im Bereich eines dieser gegenüber liegend angeordneten oder ausgebildeten (unteren) ersten Randbereichs mit einer Sackbohrung versehen sein.
Jeweilige Befestigungsaufnahmen bzw. -ausnehmungen können dabei in einem (querschnittlich betrachtet) verjüngten Aussparungsbereich des jeweiligen Pulverkammergrundkörpersegments angeordnet oder ausgebildet sein, sodass diese die Außenabmessungen des jeweiligen Pulverkammergrundkörpersegments bzw. der gesamten Pulverkammer nicht erweitern.
Bei den Pulverkammergrundkörpersegmenten handelt es sich typischerweise um spanend, d. h. insbesondere gefräst, gefertigte metallische Bauteile. Denkbar ist gleichwohl auch eine Fertigung der Pulverkammergrundkörpersegmente mittels Drahterodierens bzw. Drahtschneidens.
Bei dem die Pulverkammergrundkörpersegmente bildenden metallischen Material kann es sich um ein Leichtmetall, insbesondere um Aluminium bzw. eine Aluminiumlegierung, handeln. Leichtmetalle zeichnen sich neben einem vergleichsweise geringen Gewicht in fertigungstechnischer Hinsicht durch eine vergleichsweise einfache (spanende) Bearbeitbarkeit aus.
Die geometrisch-konstruktive Dimensionierung der Pulverkammer bzw. des Pulverraums ist zweckmäßig für die additive Fertigung vergleichsweise großer bzw. länglicher Bauteile bzw. Bauteilstrukturen ("Großstrukturen") ausgelegt. Hierbei kann es sich z. B. um Komponenten eines Kraftfahrzeugs, d. h. Karosseriestrukturen, wie Türstrukturen, handeln. Der Pulverraum kann hierfür z. B. eine maximale Tiefe von 1400 mm, insbesondere in einem Bereich zwischen 800 und 1200 mm, aufweisen. Selbstverständlich sind hier Abweichungen nach oben und unten möglich.

Neben dem Pulvermodul betrifft die Erfindung auch eine Vorrichtung zur additiven Herstellung dreidimensionaler Objekte. Die Vorrichtung, bei welcher es sich insbesondere um eine SLS- oder SLM-Vorrichtung handelt, zeichnet sich dadurch aus, sie wenigstens ein wie beschriebenes Pulvermodul umfasst. Sämtliche Ausführungen im Zusammenhang mit dem Pulvermodul gelten sonach analog für die Vorrichtung.

Die Erfindung ist anhand eines Ausführungsbeispiels in den Zeichnungsfiguren näher erläutert. Dabei zeigt:
- Fig. 1: eine Prinzipdarstellung eines Pulvermoduls gemäß einem Ausführungsbeispiel; und
- Fig. 2: eine vergrößerte Darstellung der in Fig. 1 gezeigten Einzelheit C.

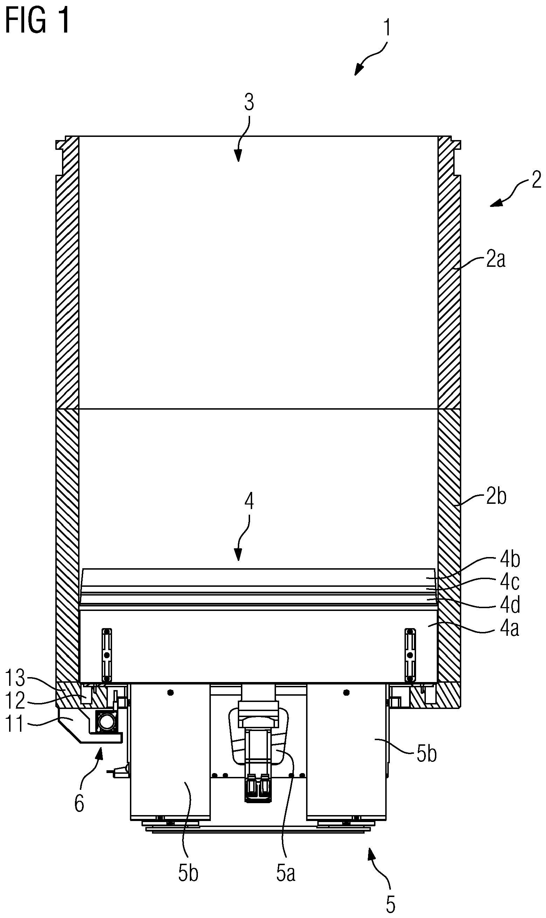

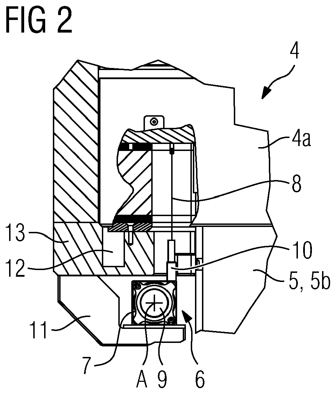

Fig. 1 zeigt eine Prinzipdarstellung eines Pulvermoduls 1 gemäß einem Ausführungsbeispiel in einer (längs)geschnittenen Ansicht. Fig. 2 zeigt eine vergrößerte Darstellung der in Fig. 1 gezeigten Einzelheit C in einer teilweise aufgebrochenen Ansicht.

Das Pulvermodul 1 stellt eine Funktionskomponente einer Vorrichtung (nicht gezeigt) zur additiven Herstellung dreidimensionaler Objekte dar. Eine entsprechende Vorrichtung ist zur additiven Herstellung wenigstens eines Objekts durch sukzessive schichtweise selektive Belichtung und damit einhergehende Verfestigung einzelner Baumaterialschichten aus einem verfestigbaren Baumaterial (nicht gezeigt) vermittels wenigstens eines Energiestrahls (nicht gezeigt) eingerichtet. Bei dem verfestigbaren Baumaterial kann es sich z. B. um ein Metallpulver handeln. Unter einem Metallpulver kann auch ein Pulvergemisch unterschiedlicher Metalle verstanden werden. Für ein Metallpulver gilt insofern, dass es sich hierbei auch um ein Pulver aus wenigstens einer Metalllegierung handeln kann. Bei dem Energiestrahl kann es sich um einen Laserstrahl handeln. Bei der Vorrichtung kann es sich insgesamt um eine Vorrichtung zur Durchführung selektiver Laserschmelzverfahren (abgekürzt SLM-Verfahren) oder selektiver Lasersinterverfahren (abgekürzt SLS-Verfahren), d. h. um eine selektive Laserschmelzvorrichtung (SLM-Vorrichtung) bzw. eine selektive Lasersintervorrichtung (SLS-Vorrichtung) handeln.

Bei dem Pulvermodul 1 kann es sich im Allgemeinen um jedwedes Pulvermodul handeln, welches zur Aufnahme und/oder Abgabe von Baumaterial eingerichtet ist. Im Besonderen kann es sich bei dem Pulvermodul 1 um ein Baumodul, in welchem der eigentliche additive Aufbau von Objekten erfolgt und welches hierfür im Rahmen der Durchführung additiver Herstellungsprozesse sukzessive schichtweise mit selektiv zu verfestigendem Baumaterial befüllt wird, um ein Dosiermodul, über welches im Rahmen der Durchführung additiver Herstellungsprozesse sukzessive schichtweise Baumaterial in eine Prozesskammer dosiert wird, oder um ein Auffangmodul, welches im Rahmen der Durchführung additiver Herstellungsprozesse mit nicht verfestigtem Baumaterial befüllt wird, handeln. Bei dem in den Fig. gezeigten Ausführungsbeispiel handelt es sich bei dem Pulvermodul 1 um ein Baumodul, wobei nachfolgende Erläuterungen nicht auf die Ausführung des Pulvermoduls 1 als Baumodul beschränkt sind.

Das Pulvermodul 1 umfasst eine Pulverkammer 2. Die Pulverkammer 2 begrenzt einen mit Baumaterial befüllbaren Pulverraum 3. Der Pulverraum 3 ist seitlich durch Wandungen (nicht näher bezeichnet) der Pulverkammer 2 begrenzt. Bodenseitig ist der Pulverraum 3 durch eine Trageinrichtung 4 begrenzt. Die Trageinrichtung ist 4 zwischen zwei Endstellungen, d. h. zwischen einer (bezogen auf die Höhe des Pulvermoduls 1) oberen und einer in Fig. 1 gezeigten unteren Endstellung relativ zu der Pulverkammer 2 bewegbar gelagert. Die bewegbare Lagerung der Trageinrichtung 4 ermöglicht die Realisierung einer, insbesondere linearen, Bewegung der Trageinrichtung 4 entlang einer vertikalen Bewegungsachse bzw. in einer vertikalen Bewegungsrichtung. Die bewegbare Lagerung der Trageinrichtung 4 ist durch eine mit dieser gekoppelte, insbesondere (elektro)motorische, Antriebs- und Aktoreinrichtung 5, welche z. B. eine Antriebseinheit 5a und zwei Aktoreinheiten 5b umfasst, realisiert.

Zur Erfassung der Position der Trageinrichtung 4 umfasst das Pulvermodul 1 eine Positionserfassungseinrichtung 6. Die Positionserfassungseinrichtung 6 ist zur Erfassung der Position der Trageinrichtung 4 eingerichtet. Die Position der Trageinrichtung 4 kann dabei relativ zu einer Komponente des Pulvermoduls 1, d. h. insbesondere relativ zu der Pulverkammer 2 erfasst werden. Die Positionserfassungseinrichtung 6 ist als Seilzuggeber (Seilzuglängengeber) ausgebildet. Der Einsatz eines Seilzuggebers zur Erfassung der Position der Trageinrichtung 4 ermöglicht eine exakte sowie zuverlässige Erfassung der Position der Trageinrichtung 4.
Anhand von Fig. 2 ist ersichtlich, dass der Seilzuggeber ein ortsfest relativ zu der Pulverkammer 2 angeordnetes Gehäuseelement 7, ein mit der Trageinrichtung 4 gekoppeltes, insbesondere seilartiges, Auszugselement 8 ("Auszugseil") sowie eine Erfassungseinrichtung (nicht gezeigt), welche zur Erfassung der Auszugslänge des Auszugselements 8 eingerichtet ist, umfasst. Bewegungen der Trageinrichtung 4 resultieren in Änderungen der Auszugslänge des Auszugselements 8; eine auf eine Bewegung der Trageinrichtung 4 zurückzuführende, insbesondere lineare, Bewegung des mit dieser gekoppelten Auszugselements 8 bedingt eine Rotationsbewegung einer Wickeleinrichtung 9 um eine Rotationsachse A. Die Erfassungseinrichtung erfasst entsprechende Rotationsbewegungen der Wickeleinrichtung 9. Eine der Erfassungseinrichtung zugehörige hard- und/oder softwaremäßig implementierte, mithin elektronische Auswerteeinheit (nicht gezeigt) ist zur Auswertung bzw. Umrechnung der erfassten Auszugslänge des Auszugselements 8 im Hinblick auf eine Position der Trageinrichtung 4 eingerichtet. Die Auswertung kann je nach konkreter Ausbildung der Auswerteeinheit z. B. (photo)elektrisch, optisch, potentiometrisch, etc. erfolgen.

Das Gehäuseelement 7 begrenzt einen Aufnahme- bzw. Innenraum (nicht näher bezeichnet), welcher zur Aufnahme der Funktionskomponenten des Seilzuggebers eingerichtet ist. In dem Aufnahmeraum befindet sich neben der Erfassungseinrichtung die Wickeleinrichtung 9, an welcher das Auszugselement 8 einseitig befestigt und von welcher das Auszugselement 8 abwickelbar ist.

Das Gehäuseelement 7 ist an einem im Bereich eines unteren Endes der Pulverkammer 2 angeordneten Anschlussbauteils 11 angeordnet. Es handelt sich hierbei um eine besonders kompakte, gleichwohl, z. B. für Service- oder Reparaturzwecke, gut zugängliche Anordnungsmöglichkeit des Gehäuseelements 7, welche die für die Anordnung des Pulvermoduls 1 in einer Vorrichtung zur additiven Herstellung dreidimensionaler Objekte maßgeblichen Abmessungen des Pulvermoduls 1 nicht verändert. Bei dem Anschlussbauteil 11 handelt es sich um ein mehrschenkliges, d. h. L-förmiges, Winkelelement, bei welchem ein erster (vertikaler) Schenkel zur Befestigung des Anschlussbauteils 11 an einem an der Pulverkammer 2 angeordneten Aufnahmeelement 13, welches einen zur Aufnahme von Baumaterial eingerichteten, eine Strömungskanalstruktur 12 umfassenden Aufnahmebereich begrenzt, und ein weiterer (horizontaler) Schenkel zur Befestigung des Gehäuseelements 7 an dem Anschlussbauteil 11 dient. Das Anschlussbauteil 11 kann, z. B. vermittels einer Schraubbefestigung, (beschädigungs- bzw. zerstörungsfrei) lösbar an dem Aufnahmeelement 13 befestigt sein.

Anhand von Fig. 2 ist weiter ersichtlich, dass sich das Auszugselement 8 ausgehend von dem Gehäuseelement 7 zunächst abschnittsweise (bezogen auf seine Längserstreckung) von wenigstens einem hülsen- oder ösenartigen Abschnitt 10 umgeben und sodann freiliegend zwischen dem Gehäuseelement 7 und der Trageinrichtung 4 erstreckt.

Der nähere Aufbau der Trageinrichtung 4 ergibt sich aus Fig. 1. Die Trageinrichtung 4 umfasst einen tischartigen Grundkörper 4a und mehrere plattenartige bzw. -förmige, stapelartig auf dem Grundkörper 4a angeordnete Auflagekörper 4b - 4d. Die Auflagekörper 4b - 4d sind unterschiedlich funktionalisiert. Bei entsprechenden Auflagekörpern 4b - 4d handelt es sich z. B. um eine Bauplatte 4b, um einen Heizkörper 4c und um einen thermischen Isolierkörper 4d. Zwischen unmittelbar benachbarten Auflagekörpern 4b - 4d können zumindest abschnittsweise Dichtelemente (nicht gezeigt) angeordnet oder ausgebildet sein. Anhand von Fig. 2 ist ersichtlich, dass das Auszugselement 8 an dem Grundkörper 4a befestigt ist. Das Auszugselement 8 kann z. B. form- oder kraftschlüssig, d. h. z. B. vermittels einer Einhak-, Klemm-, Press- oder einer Schraubbefestigung, an dem Grundkörper 4a befestigt sein.

Wenngleich in dem in den Fig. gezeigten Ausführungsbeispiel nicht gezeigt, kann die Positionserfassungseinrichtung 6 auch mehrere Seilzuggeber umfassen. Die Vorsehung mehrerer Seilzuggeber ermöglicht eine redundante Erfassung der Position der Trageinrichtung 4, sodass eine Positionserfassung auch bei Ausfall eines Seilzuggebers möglich ist. Gleichermaßen lassen sich vermittels mehrerer Seilzuggeber gegebenenfalls unerwünschte Veränderungen der Ausrichtung der Trageinrichtung 4, d. h. z. B. Schrägstellungen, erfassen; dies wäre z. B. der Fall, wenn verschiedene Seilzuggeber verschiedene Positionen der Trageinrichtung 4 erfassen. Die vermittels jeweiliger Seilzuggeber erfassten Positionen der Trageinrichtung 4 lassen sich bei entsprechender Konfiguration der der Erfassungseinrichtung zugehörigen Auswerteeinheit, z. B. durch eine Mittelwertbildung, auch gemeinsam auswerten.

Der maximale Bewegungsweg (Hub) der Trageinrichtung 4 kann zwischen 800 und 1200 mm, insbesondere zwischen 950 und 1050 mm, liegen. Der Einsatz entsprechender Seilzuggeber ermöglicht eine exakte Erfassung der Position der Trageinrichtung 4 gerade auch bei entsprechend großen Hüben.

Entsprechend große Hübe der Trageinrichtung 4 erfordern eine entsprechende hoch ausgebildete Pulverkammer 2. Hierzu kann die Pulverkammer 2 bzw. ein den Pulverraum 3 begrenzender Pulverkammergrundkörper (optional) in mehrere unter Ausbildung des Pulverkammergrundkörpers aneinander befestigbare oder befestigte Pulverkammergrundkörpersegmente 2a, 2b segmentiert ausgebildet sein. Durch stapelartige Anordnung jeweiliger Pulverkammergrundkörpersegmente 2a, 2b können prinzipiell beliebig hohe Pulverkammern 2 und sonach beliebig hohe Bauhöhen realisiert werden. Die Segmentierung der Pulverkammer 2 bzw. des Pulverkammergrundkörpers stellt, wie erwähnt, eine optionale Ausgestaltung der Pulverkammer 2 dar.

## Patentansprüche

1. Pulvermodul (1) für eine Vorrichtung zur additiven Herstellung dreidimensionaler Objekte, umfassend eine einen mit pulverförmigem Baumaterial befüllbaren Pulverraum (3) begrenzende Pulverkammer (2), eine in dem Pulverraum (3) angeordnete, den Pulverraum (3) bodenseitig begrenzende, relativ zu der Pulverkammer (2) bewegbar gelagerte Trageinrichtung (4) sowie eine Positionserfassungseinrichtung (6), welche zur Erfassung der Position der Trageinrichtung (4) eingerichtet ist, **dadurch gekennzeichnet, dass** die Positionserfassungseinrichtung (6) als Seilzuggeber ausgebildet ist oder wenigstens einen solchen umfasst.

2. Pulvermodul nach Anspruch 1, **dadurch gekennzeichnet, dass** der Seilzuggeber ein ortsfest relativ zu der Pulverkammer (2) angeordnetes Gehäuseelement (7), ein mit der Trageinrichtung (4) koppelbares oder gekoppeltes, insbesondere seilartiges, Auszugselement (8) sowie eine Erfassungseinrichtung, welche zur Erfassung der Auszugslänge des Auszugselements (8) eingerichtet ist, umfasst.

3. Pulvermodul nach Anspruch 2, **dadurch gekennzeichnet, dass** das Gehäuseelement (7) an einem im Bereich eines unteren Endes des Pulvermoduls (1), insbesondere der Pulverkammer (2), angeordneten oder ausgebildeten Anschlussbauteils (11) angeordnet oder ausgebildet ist.

4. Pulvermodul nach Anspruch 2 oder 3, **dadurch gekennzeichnet, dass** das Auszugselement (8) sich zumindest abschnittsweise frei liegend und/oder sich zumindest abschnittsweise von wenigstens einem hülsenartigen Abschnitt (10) umgeben zwischen dem Gehäuseelement (7) und der Trageinrichtung (4) erstreckt.

5. Pulvermodul nach einem der Ansprüche 2 bis 4, **dadurch gekennzeichnet, dass** die Erfassungseinrichtung eine elektronische Auswerteeinheit umfasst.

6. Pulvermodul nach einem der vorgehenden Ansprüche, **dadurch gekennzeichnet, dass** die Trageinrichtung (4) einen tischartigen Grundkörper (4a) und wenigstens ein, insbesondere mehrere, plattenartige auf dem Grundkörper (4a) angeordnete oder ausgebildete Auflagekörper (4b - 4d) umfasst.

7. Pulvermodul nach einem der vorhergehenden Ansprüche, **dadurch gekennzeichnet, dass** die Positionserfassungseinrichtung (6) mehrere Seilzuggeber umfasst.

8. Pulvermodul nach einem der vorhergehenden Ansprüche, **dadurch gekennzeichnet, dass** die Trageinrichtung (4) entlang einer vertikalen Bewegungsachse bewegbar gelagert ist.

9. Pulvermodul nach einem der vorhergehenden Ansprüche, **dadurch gekennzeichnet, dass** der maximale Bewegungsweg der Trageinrichtung (4) zwischen 800 und 1200 mm, insbesondere zwischen 950 und 1050 mm, liegt.

10. Pulvermodul nach einem der vorhergehenden Ansprüche, **dadurch gekennzeichnet, dass** die Pulverkammer (2) einen Pulverkammergrundkörper umfasst, welcher den Pulverraum (3) begrenzt, wobei der Pulverkammergrundkörper in mehrere unter Ausbildung des Pulverkammergrundkörpers aneinander befestigbare oder befestigte Pulverkammergrundkörpersegmente (2a, 2b) segmentiert ausgebildet ist.

11. Vorrichtung zur additiven Herstellung dreidimensionaler Objekte, **gekennzeichnet durch** wenigstens ein Pulvermodul (1) nach einem der vorhergehenden Ansprüche.

## Claims

1. A powder module (1) for an apparatus for additive manufacturing of three-dimensional objects, comprising a powder chamber (2) that delimits a powder room (3) that is fillable with powdered building material, a carrier device (4) that is situated in the powder room (3) and that delimits the powder room (3) at the bottom, and that is supported so as to be movable relative to the powder chamber (2), and a position detection device (6) that is configured for detecting the position of the carrier device (4), **characterized in that** the position detection device (6) is designed as or at least includes a cable pull sensor.

2. The powder module according to Claim 1, **characterized in that** the cable pull sensor includes a housing element (7) that is stationary relative to the powder chamber (2), a pull-out element (8), in particular a cable-like pull-out element, that is coupled or coupleable to the carrier device (4), and a detection device that is configured for detecting the pull-out length of the pull-out element (8) .

3. The powder module according to Claim 2, **characterized in that** the housing element (7) is situated or formed on a connecting component (11) that is situated or formed in the area of a lower end of the powder module (1), in particular of the powder chamber (2).

4. The powder module according to Claim 2 or 3, **characterized in that** the pull-out element (8) extends at least partially exposed, and/or extends, at least partially surrounded by at least one sleeve-like section (10), between the housing element (7) and the carrier device (4).

5. The powder module according to one of Claims 2 to 4, **characterized in that** the detection device includes an electronic evaluation unit.

6. The powder module according to one of the preceding claims, **characterized in that** the carrier device (4) includes a table-like base body (4a) and at least one, in particular multiple, plate-like support bodies (4b-4d) that is/are situated or formed on the base body (4a) .

7. The powder module according to one of the preceding claims, **characterized in that** the position detection device (6) includes multiple cable pull sensors.

8. The powder module according to one of the preceding claims, **characterized in that** the carrier device (4) is supported so as to be movable along a vertical axis of motion.

9. The powder module according to one of the preceding claims, **characterized in that** the maximum path of motion of the carrier device (4) is between 800 and 1200 mm, in particular between 950 and 1050 mm.

10. The powder module according to one of the preceding claims, **characterized in that** the powder chamber (2) includes a powder chamber base body that delimits the powder room (3), wherein the powder chamber base body has a design that is segmented into multiple powder chamber base body segments (2a, 2b) that are fastened or fastenable to one another to form the powder chamber base body.

11. An apparatus for additive manufacturing of three-dimensional objects, **characterized by** at least one powder module (1) according to one of the preceding claims.

## Revendications

1. Module de poudre (1), destiné à un dispositif de fabrication additive d'objets en trois dimensions, comprenant une chambre à poudre (2) délimite un espace à poudre (3) pouvant être rempli d'une matière de construction pulvérulente, un moyen de support (4) situé dans l'espace de poudre (3), délimitant l'espace à poudre (3) côté fond et monté de manière mobile par rapport à la chambre à poudre (2), et un moyen de détection de position (6) adapté pour détecter la position du moyen de support (4), **caractérisé en ce que** le moyen de détection de position (6) est conçu comme capteur de traction de câble ou comprend au moins un tel capteur de traction de câble.

2. Module de poudre selon la revendication 1, **caractérisé en ce que** le capteur de traction de câble comprend un élément formant boîtier (7) qui est disposé de façon fixe par rapport à la chambre à poudre (2), un élément d'extraction (8) qui se présente notamment sous la forme d'un câble et qui est accouplé ou peut être accouplé au moyen de support (4), et un moyen de détection qui est adapté pour détecter la longueur d'extraction de l'élément d'extraction (8).

3. Module de poudre selon la revendication 2, **caractérisé en ce que** l'élément formant boîtier (7) est situé ou formé au niveau d'un composant de raccordement (11) situé ou formé au niveau d'une extrémité inférieure du module de poudre (1), en particulier de la chambre à poudre (2).

4. Module de poudre selon la revendication 2 ou la revendication 3, **caractérisé en ce que** l'élément d'extraction (8) s'étend entre l'élément formant boîtier (7) et le moyen de support (4) au moins en partie de manière libre et/ou au moins en partie en étant entouré d'au moins une portion (10) en forme de manchon.

5. Module de poudre selon l'une des revendications 2 à 4, **caractérisé en ce que** le dispositif de détection comprend une unité d'évaluation électronique.

6. Module de poudre selon l'une des revendications précédentes, **caractérisé en ce que** le moyen de support (4) comprend un corps de base (4a) en forme de table et au moins un corps d'appui (4b à 4d), en particulier plusieurs corps d'appui, en forme de plaque qui sont disposés ou formés sur le corps de base (4a).

7. Module de poudre selon l'une des revendications précédentes, **caractérisé en ce que** le moyen de détection de position (6) comprend plusieurs capteurs de traction de câble.

8. Module de poudre selon l'une des revendications précédentes, **caractérisé en ce que** le moyen de support (4) est monté de manière à mobile le long d'un axe de déplacement vertical.

9. Module de poudre selon l'une des revendications précédentes, **caractérisé en ce que** le chemin de déplacement maximal du moyen de support (4) est compris entre 800 et 1200 mm, notamment entre 950 et 1050 mm.

10. Module de poudre selon l'une des revendications précédentes, **caractérisé en ce que** la chambre de poudre (2) comprend un corps de base qui délimite l'espace à poudre (3), le corps de base de la chambre de poudre étant conçu de manière segmentée en plusieurs segments (2a, 2b) fixés ou pouvant être fixés les uns aux autres pour former le corps de base de la chambre à poudre.

11. Dispositif de fabrication additive d'objets en trois dimensions, **caractérisé par** au moins un module de poudre (1) selon l'une des revendications précédentes.
